# EUROPEAN PATENT APPLICATION

(11) **EP 4 764 957 A1**
(43) Date of publication of application: **24.06.2026**
(21) Application number: 25220044.9
(22) Date of filing: 02.12.2025
(51) Int. Cl.: G06N 3/063, G06N 3/0495, G06N 3/0985, G06N 20/00

(54) **SYSTEMS AND METHODS FOR PROCESSING PROMPTS FOR A MACHINE LEARNING MODEL**

(30) Priority: 20.12.2024 US 202463737223 P; 16.07.2025 US 202519271451
(71) Applicant: Samsung Electronics Co., Ltd., Suwon-si, Gyeonggi-do 16677 (KR)
(72) Inventor: SU, Zhaoyuan, San Jose, CA, 95134 (US); HAN, Jingoo, San Jose, CA, 95134 (US); CHOI, Joon Hee, San Jose, CA, 95134 (US); CHENG, Yue, San Jose, CA, 95134 (US); ANWAR, Ali, San Jose, CA, 95134 (US); FOUNTAIN, Sam, San Jose, CA, 95134 (US)
(74) Representative: Kuhnen & Wacker Patent- und Rechtsanwaltsbüro PartG mbB

(57) **Abstract**

Systems and methods for processing prompts for a machine learning model are disclosed. In some embodiments, a processor receives a first input and a second input for a first machine learning model. The processor identifies a first service level for the first input and a second service level for the second input. Based on the first service level and the second service level, the processor determines a first processing criterion and a first batch size for the first input different from a second processing criterion and a second batch size for the second input. The first machine learning model processes the first input according to the first processing criterion and the first batch size for generating a response based on the first input.

## Description

### FIELD

One or more aspects of embodiments according to the present disclosure relate to machine learning systems, and more particularly to processing prompts directed to a machine learning model.

### BACKGROUND

The use of artificial intelligence (Al) has increased dramatically over the last few years. Al has become commonly used in domains such as image classification, speech recognition, media analytics, health care, autonomous machines, smart assistants, etc. Using Al often necessitates the use of large datasets (e.g., from databases, sensors, images etc.) and the use of advanced algorithms that similarly necessitate high performance computing and memory capacity.

The above information disclosed in this Background section is only for enhancement of understanding of the background of the present disclosure, and therefore, it may contain information that does not form prior art.

### SUMMARY

One or more embodiments of the present disclosure are directed to a system comprising a processor, a first memory, and a second memory. The second memory stores instructions that, when executed by the processor, cause the processor to: receive a first input and a second input for a first machine learning model; identify a first service level for the first input and a second service level for the second input; based on the first service level and the second service level, determine a first processing criterion and a first batch size for the first input different from a second processing criterion and a second batch size for the second input; and process, by the first machine learning model, the first input according to the first processing criterion and the first batch size for generating a response based on the first input.

According to some embodiments, the first memory is associated with an acceleration unit.

According to some embodiments, the first service level is associated with a latency requirement for providing the response based on the first input.

According to some embodiments, the first processing criterion identifies an order for handling the first input relative to the second input, wherein the order is different from an order in which the first input is received by the processor relative to the second input.

According to some embodiments, the instructions further cause the processor to select the first processing criterion based on hardware metrics of the system.

According to some embodiments, the instructions that cause the processor to determine the first batch size include instructions that cause the processor to: identify predicted length of a first response for the first input, wherein the first batch size is based on the predicted length.

According to some embodiments, the instructions that cause the processor to identify the predicted length include instructions that cause the processor to: provide the first input to a second machine learning model; and receive, from the second machine learning model, an inference for the first input, wherein the predicted length is based on the inference.

According to some embodiments, the second machine learning model is configured to use less hardware resources than the first machine learning model.

According to some embodiments, the instructions that cause the processor to determine the first batch size include instructions that cause the processor to: determine hardware metrics for the system, wherein the first batch size is based on the hardware metrics.

According to some embodiments, the instructions further cause the processor to: determine that usage of the first memory satisfies a threshold; and based on the usage of the first memory satisfying the threshold, compress at least a portion of data stored in the first memory.

One or more embodiments of the present disclosure are also directed to a method comprising: receiving, by a processor, a first input and a second input for a first machine learning model; identifying, by the processor, a first service level for the first input and a second service level for the second input; based on identifying the first service level and the second service level, determining, by the processor, a first processing criterion for the first input different from a second processing criterion for the second input; identifying, by the processor, usage of a first memory; based on identifying, by the processor, the usage of the first memory, selecting a first batch size for the first input different from a second batch size for the second input; and processing, by the first machine learning model, the first input according to the first processing criterion and the first batch size for generating a response based on the first input.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a block diagram of computing environment for processing machine learning (ML) queries according to one or more embodiments;
FIG. 2 depicts a conceptual diagram of example input prompts that are reorganized by a scheduling engine according to one or more embodiments;
FIG. 3 depicts a conceptual diagram of example input prompts that are organized into batches having a batch size according to one or more embodiments;
FIG. 4 depicts a conceptual diagram of KV cache data that is compressed by a compression engine 122 according to one or more embodiments;
FIG. 5 depicts a flow diagram of a process for processing input prompts for an ML model according to one or more embodiments;
FIG. 6 depicts another flow diagram of a process for processing input prompts for an ML model according to one or more embodiments; and
FIG. 7 depicts a flow diagram of a process for selecting a batch size and grouping one or more input prompts into a batch according to the batch size according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

In addition, a feature of embodiments of the present disclosure may be combined or combined with one or more other features, partially or entirely, and may be operated in various ways, and an embodiment may be implemented independently of one or more other embodiments, or in conjunction with the one or more other embodiments.

A machine learning (ML) model such as a large language model (LLM) may be deployed on a server in a cloud computing environment. Although LLM is used as an example to describe various embodiments of the present disclosure, a person of skill in the art should recognize embodiments of the present disclosure may extend to other types of ML models and are not restricted to LLMs.

A cloud computing environment hosting an LLM may provide service level objectives (SLOs) or guarantees in processing input queries or prompts by the LLM. For example, the cloud computing environment may guarantee a 99^{th} percentile tail latency where out of 100 prompts, 99 of the prompts are guaranteed to be responded within a set time frame (e.g., 1 millisecond). When the SLOs are violated, the cloud computing environment may need to compensate the customers to which the guarantees were made (e.g., the providers of the LLM).

In general terms, embodiments of the present disclosure are directed to systems and methods for processing input prompts directed to an ML in a manner that enhances SLO compliance under diverse workloads. In some embodiments, the systems and methods for processing input prompts are aimed to reduce out-of-memory errors. Out-of-memory errors may increase latency in processing the workloads because recovering from out-of-memory errors take time. In some embodiments, embodiments of the present disclosure provide SLO-aware scheduling of input prompts which processes latency-sensitive and throughput-intensive workloads for achieving SLO-compliance. Embodiments of the present disclosure further provide dynamic batching of the input prompts based on system performance metrics for reducing out-of-memory errors. Embodiments of the present disclosure are further directed to dynamic and transparent compression of intermediary data used for generating inferences by the LLM when out-of-memory errors are anticipated.

Challenges that may be encountered in serving workloads to fulfill an SLO may be that variability of response lengths may make resource allocation (e.g., memory allocation) difficult. For example, some queries may generate long answers while other queries may general short answers. A long answer may utilize more memory than a short answer. Long answers are more prone to out-of-memory errors.

Another challenge may be batching trade-offs. Larger batches may be more efficient in the use of hardware resources (e.g., GPU), but increase latency. Smaller batches may lower latency but underutilize the hardware resources. Having a fixed, large batch size may at times result in SLO violation due to the increased latency. In some cases, the increased latency may be due to out-of-memory errors. Having a fixed, small batch size, on the other hand, may consistently underutilize the hardware resources.

A further challenge may relate to the size of the intermediary data maintained by the LLM. The intermediary data may be referred to as a key-value (KV) cache data. Long sequences and multi-turn conversations may lead to the growth of the KV cache data that may increase the risk of out-of-memory errors.

In some embodiments, a scheduling engine schedules the execution of input workloads and dynamically allocates computing resources to adjust to diverse workloads. In this regard, the scheduling engine may monitor incoming workloads for predicting latency and/or throughput requirements. The scheduling engine may reorder or adjust scheduling of the workloads so that tasks are prioritized based on their latency requirements and system demands, to allow latency-sensitive tasks receive the resources that they need. In some embodiments, computational resources are dynamically allocated in real time for managing both latency-sensitive and throughput-intensive workloads.

In some embodiments, a monitoring engine tracks hardware metrics such as, for example, GPU memory usage, processing latency, and system throughput, and provides the metrics to the scheduling engine for allocating resources to the incoming tasks. The collecting and analysis of the hardware metrics allows the scheduling engine to proactively adjust scheduling decisions, resource allocation, and help reduce bottlenecks. The feedback-driven scheduling mechanism allows the system to adapt to workload fluctuations to help maintain SLO compliance under variable and unpredictable conditions.

In some embodiments, a batching engine identifies batch sizes for the input workloads in manner that balances the trade-off between latency and hardware utilization. In this regard, smaller batches may help reduce latency, but may be less efficient in the use of computing resources (e.g., GPU) to process the batches. Larger batches may require more memory, making it prone to out-of-memory errors, but may more efficiently use the computing resources to process the batches.

In some embodiments, a resource usage predictor predicts response lengths for incoming prompts. Anticipated memory usage may be predicted based on the predicted response lengths. The prediction may be via a lightweight machine learning model. Based on the predicted memory use and system performance metrics such as GPU utilization and latency, the batch sizes for processing the workloads may be dynamically adjusted. In some embodiments, the batch sizes are adjusted to reduce out-of-memory errors that result in increased latency.

In some embodiments, the batching engine balances the trade-off between latency and hardware utilization to determine the batch sizes. In this regard, during periods of high traffic, batch sizes may be increased to maximize throughput. During periods of low traffic, smaller batches may be created to prioritize response time. Dynamic batching may also minimize waiting times for individual tasks to help maintain SLO compliance across varying workloads.

One or more embodiments of the present disclosure further allow reduction in GPU memory consumption by compressing the intermediate KV-cache data stored in the GPU memory. The compression may be invoked on an as-needed basis based on SLO considerations. In this regard, the KV-cache data may be compressed and/or evicted based on the hardware metrics tracked by the monitor. In some embodiments, compression and/or eviction of the KV-cache data is invoked based on determining that utilization of the GPU memory is above a threshold value.

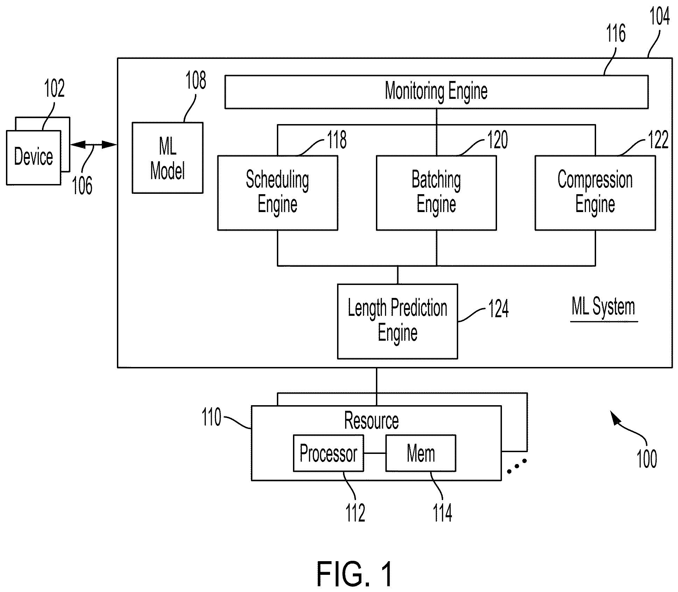

FIG. 1 depicts a block diagram of computing environment 100 for processing machine learning (ML) queries according to one or more embodiments. The computing environment includes one or more devices 102 providing input queries, requests, or prompts (used interchangeably herein) to an ML system 104 over a data communications network 106. For example, the device 102 may include an application (e.g., chatbot application, image classification application, content generation application, etc.) that, based on a user input, provides a prompt to the ML system 104. The ML system 104 may process the prompt and provide an inference or prediction as a response to the prompt. For example, the prompt may include an image, and the response may include a predicted classification/identification of the image. In other examples, the prompt may include a question, and the response may include a predicted answer to the question. The one or more devices 102 may provide prompts from one or more users serially, in parallel, and/or the like.

The data communications network 106 may include any hardwired and/or wireless network configured to transport electronic data between the devices 102 and the ML system 104. For example, the data communications network 106 may include a local area network, wide area network, and/or the public Internet.

In some embodiments, the ML system 104 is implemented in hardware, firmware (e.g., via an ASIC), and/or by a more general purpose hardware, such as a central processing unit (CPU) configured to execute instructions stored in memory (e.g., a non-transitory storage medium) for providing the functionalities described herein. The ML system 104 may include one or more buffers or queues (not shown) for temporarily storing data received or generated by the ML system.

In some embodiments, the ML system 104 is operated on a cloud computing system. The cloud computing system may provide one or more SLO guarantees (also referred to latency requirements) for processing and responding to the input prompts. The SLO guarantees may include for example, 99^{th}-percentile (or some other percentile) tail latency, time-to-first token (TTFT), time-per-output token (TPOT), and/or the like. The SLO guarantees may state that at least a portion of the input queries are to be processed to generate a response within a maximum threshold latency or time period associated with the corresponding SLOs. For example, a 99^{th} percentile tail latency guarantee may indicate that 99 percent of the prompts to the ML system 104 will return a response within the maximum latency time period (e.g. 5 seconds). Penalties may be imposed for violating the SLO guarantees.

In some embodiments, inferences for the received prompts are generated by a ML model 108. The ML model is described herein as an LLM, although embodiments are not limited thereto. The ML model may include one or more (e.g., N) neural network layers implemented as transformer layers. The neural network layers may be configured to take an input token generated based on an input prompt, and process and transform the input token to generate an output token. For example, the input token may be a word or a phrase, and the output token may be a next word or phrase in a sequence that is predicted by the ML model based on the input token. The prompt sequence that includes the input token is used to generate key-value (KV) data (referred to as a KV cache or intermediate data) for one or more transformer layers of the LLM. The transformer layers may use and update the KV cache to generate the output token.

In some embodiments, a batching or grouping mechanism is employed for grouping prompts (or more specifically, tokens associated with one or more prompts) for being processed by the one or more layers of the ML model 108 to generate an inference. The processing may include computations and/or memory accesses such as loading and/or storing data utilized for the computations. One or more computing or hardware resources 110 may be invoked for storing data and performing the computations. In some embodiments, the computing resources 110 are implemented as one or more GPUs, although embodiments are not limited thereto, and may include other types of hardware acceleration units including other types of Al acceleration units.

In some embodiments, the computing resources 110 include, without limitation, one or more processors 112 and memory 114. The one or more processors 112 may include circuitry such as one or more central processing units (CPUs), graphics processing units (GPUs), tensor processing units (TPUs), microcontrollers, digital signal processors (DSPs), application-specific integrated circuits (ASICs), field programmable gate arrays (FPGAs), hard-wired logic, and/or analog circuitry.

The memory 114 may include one or more volatile and/or nonvolatile memory devices, such as, for example, a high-bandwidth memory (HBM), a dynamic random access memory (DRAM), a static random access memory (SRAM), a NAND flash memory, a low-power double data rate (LPDDR) memory, a compute express link (CXL) memory, and/or the like. The memory 114 may store data utilized in executing the machine learning model, such as layer weights associated with one or more layers of the machine learning model and key-value (KV) data for tokens associated with one or more requests made to the machine learning model. The memory 114 may also store all or a portion of the ML model 108.

In some embodiments, the ML system 104 includes a monitoring engine 116, scheduling engine 118, batching engine 120, compression engine 122, and length prediction engine 124. Although the one or more engines 118-124 are assumed to be separate functional units, a person of skill in the art will recognize that the functionality of the engines may be combined or integrated into a single engine or module, or further subdivided into further sub-engines or sub-modules without departing from the spirit and scope of the inventive concept. For example, the compression engine 122 may be integrated into the scheduling and/or batching engines 118, 120.

In some embodiments, the monitoring engine 116 is configured to monitor (e.g., in real time), one or more metrics of the system. The monitored metrics may include, for example, usage or capacity of the memory 114, processing latency of input prompts, system throughput, fullness of input buffers receiving the input prompts, rate in which the input buffers are filled or emptied, and/or other metrics. The monitored metrics may be stored in one or more tables (or other type of data structure), and updated as the input prompts are processed by the ML model 108. The monitored metrics may be provided to the scheduling engine 118, batching engine 120, and/or compression engine 122 for making and adjusting scheduling decisions, determining batch sizes, allocating resources, and making other decisions or adjustments for satisfying SLO requirements associated with the input prompts, under variable and/or unpredictable workloads.

In some embodiments, the scheduling engine 118 is configured to receive the input prompts and make or adjust scheduling decisions based on the SLO (e.g., latency) requirements of the prompts and the monitored system metrics. In this regard, the scheduling engine 118 is configured to reorder the incoming prompts based on their SLO requirements and allocate one or more of the resources 110 to the prompts according to the modified order. For example, a received first prompt may be prioritized over a received second prompt, and processed out-of-turn in order to satisfy the SLO requirement of the first prompt. In this example, the first prompt is received by the ML system 104 after receipt of the second prompt, but is allocated the resources 110 and processed before the second prompt if the first prompt has a more stringent or sensitive SLO requirement than the second prompt.

In some embodiments, the batching engine 120 is configured to determine a batch size for processing the received input prompts. In some embodiments, instead of using a fixed or preset batch size that does not adapt to different workload conditions, the batch size is set as the prompts are received (e.g., dynamically or on the fly) based on characteristics of the prompt and the metrics monitored by the monitoring engine 116. The characteristic of the prompt may be, for example, the SLO associated with the prompt, and/or size of response to be generated by the prompt. The monitored hardware metrics may include, for example, amount of traffic (e.g., input prompts) to the ML system 104, processor 112 usage, memory 114 usage, and/or the like.

One or more of the characteristics of the prompt and the monitored hardware metrics may be used as parameters of a batching algorithm to determine a batch size for the prompts. One or more of the parameters may have a higher weight in determining the batch size than other parameters. For example, SLO sensitivity may be a parameter than is of higher weight (e.g., more important) than other parameters of the batching algorithm.

In some embodiments, the batching algorithm is configured to balance the trade-off between latency and hardware resource utilization in selecting the batch sizes. The larger the batch size, the more efficient the resource utilization may be, but the higher the risk of out-of-memory errors which may lead to SLO violations. Conversely, the smaller the batch size, the higher the SLO compliance may be, but may result in less efficient use of the hardware resources.

In some embodiments, the batching engine 120 uses current traffic to the ML system 104, and predicted length or size of the responses to be generated by the received input prompts as parameters to the batching algorithm for selecting the batch sizes. The predicted length may determine an amount of the memory 114 to be used to process the prompts. If the length of the responses for a batched set of input prompts use memory larger than the size of the allocated memory 114, an out-of-memory error may occur.

In some embodiments, a selected batch size is inversely proportional to the length of the responses. In this regard, the larger the length of the response, the smaller the batch size of a batch to which the prompt belongs. In some embodiments, a maximum batch size is set so that the total size of responses of the prompts in the batch are not larger than the size of the allocated memory 114. In this manner, out-of-memory errors may be reduced.

In some embodiments, the selected batch size is further determined by the traffic to the ML system 104. For example, the higher the traffic, the higher the batch size (e.g., without exceeding the maximum batch size) for maximizing throughput of the system. The lower the traffic, the smaller the batch size for prioritizing response time. In some embodiments, traffic to the ML system 104 may be determined based on the hardware metrics provided by the monitoring engine 116 such as, for example, fullness of an input buffer receiving the input prompts, rate in which the input buffer is filled or emptied, processor 112 utilization, processing latencies, and the like. Higher processor 112 utilization and higher processing latencies may indicate increased traffic, while lower processor utilization and lower processing latencies may indicate decreased traffic.

In some embodiments, the selected batch size may further increase or decrease based on the SLO of the prompts. In some embodiments, prompts with SLOs that indicate a higher sensitivity to latency may be assigned to smaller sized batches, while prompts with SLOs that indicate less or no sensitivity to latency may be assigned to higher sized batches. For example, a prompt with a highly sensitive SLO (e.g., a 99^{th}-percentile tail latency) may have a smaller batch size than a prompt with a sensitive SLO (e.g., a 90^{th}-percentile tail latency). In some embodiments, the size of a prompt with an SLO higher than a threshold (e.g., higher than 90^{th} percentile tail latency) is one (1).

In some embodiments, a predicted length or size of a response to be generated by a prompt is provided by the length prediction engine 124. The length prediction engine may include a second machine learning model of a smaller size than the ML model 108 (referred to herein as a lightweight ML model). For example, the second machine learning model may include less parameters, lesser number of transformer layers, and/or perform a lesser number of operations than the ML model 108. In this regard, the second machine learning models is configured to use less of the hardware resources 110 than the ML model 108.

The lightweight ML model may be trained to predict a length of a response of an input prompt. In this regard, the input prompts received by the ML system 104 may be provided to the lightweight ML model to generate inferences (e.g., predicted responses) for the input prompts. The length prediction engine 124 may identify a size or length of the predicted responses and return the identified size or length to a requesting engine (e.g., the scheduling engine 118, batching engine 120, and/or compression engine 122). In some embodiments, the length prediction engine 124 estimates an amount of memory that will be used based on the identified size or length of the responses, and returns the estimated memory use to the requesting engine.

In some embodiments, the compression engine 122 allows efficient use of the memory 114 as the input prompts are processed by the ML model 108, to help satisfy the SLO requirements of the prompts. In this regard, the compression engine 122 monitors use of the memory 114 to determine whether a trigger for compression is detected. A trigger for compression may be detected, for example, when utilization of the memory 114 is higher than a threshold utilization value (or capacity is lower than threshold capacity value). For example, a trigger for compression may be detected when memory utilization is higher than 70%.

In some embodiments, the compression engine 122 compresses all or a portion of the KV cache data in the memory 114 based on detecting the trigger. The compression technique used by the compression engine 122 may include, for example, quantization, eviction, and/or the like. For example, quantization may reduce the precision of the stored KV data. Eviction techniques may include removing KV data that may be less relevant to a current context. For example, KV data associated with earlier input prompts may be less relevant in generating responses for current input prompts and may be removed. The compression of the KV data may reduce consumption of the memory 114 to reduce out-of-memory errors.

In some embodiments, the compression engine 122 is configured to perform compression of the ML model 108 to lower the overall memory footprint of the model. The compression of the ML model 108 may include, for example, parameter pruning, precision reduction, and/or the like. Compression of the ML model 108 may help free up some of the memory 114, helping reduce out-of-memory errors.

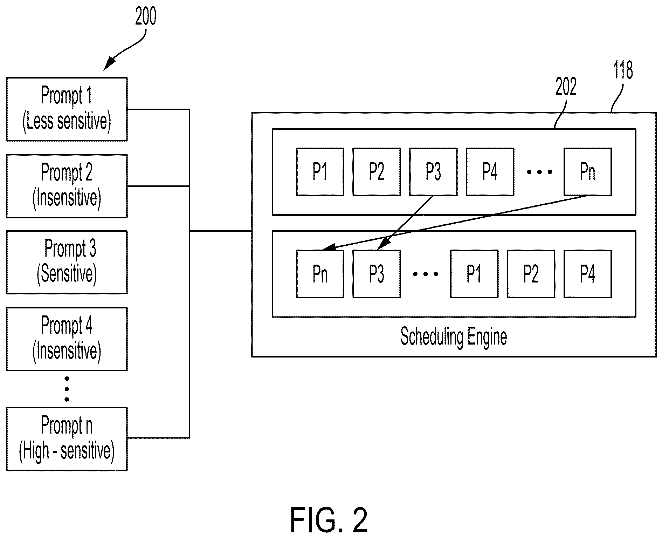

FIG. 2 depicts a conceptual diagram of example input prompts 200 that are reorganized by the scheduling engine 118 according to one or more embodiments. The received input prompts may be collected in an input buffer 202 in the order in which they are received. In the example, of FIG. 2, prompt 1 (P1), prompt 2 (P2), prompt 3 (P3), prompt 4 (P4) . . . prompt n (Pn) are received in the indicated order. Furthermore, P1 is deemed to be SLO less-sensitive, P2 is deemed to be SLO insensitive, P3 is deemed to be SLO sensitive, and Pn is deemed to be SLO high-sensitive. A SLO high-sensitive input prompt may be deemed to have a higher percentile tail latency requirement than an SLO less-sensitive or insensitive input prompt.

In some embodiments, the scheduling engine 118 reorganizes the received input prompts according to the SLO sensitivity so that the input prompts with higher sensitivity are scheduled to be processed by the ML model 108 before the input prompts with lower sensitivity. For example, in the example of FIG. 2, Pn is scheduled to be processed first although it was received last because it has the highest SLO sensitivity. P3 has a next highest sensitivity (SLO sensitive), and is thus scheduled to be processed next. The remaining input prompts P1, P2, and P4 are either SLO insensitive or less sensitive, and are therefore scheduled to be processed after P3, in the order in which they were received.

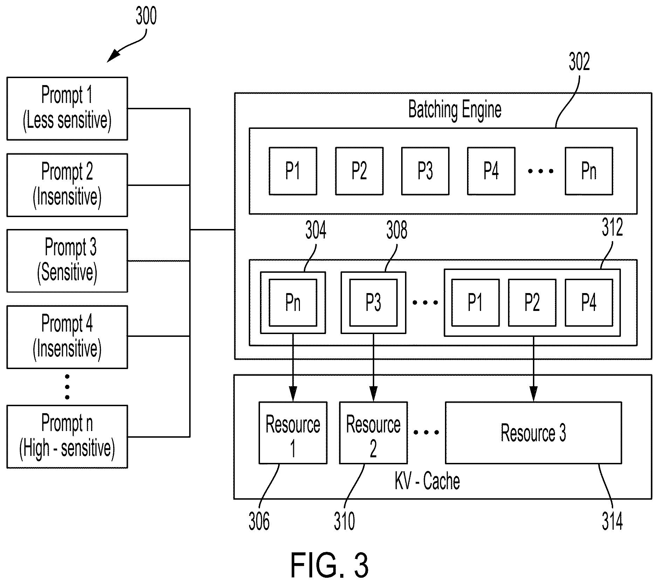

FIG. 3 depicts a conceptual diagram of example input prompts 300 that are organized into batches having a batch size according to one or more embodiments. The received input prompts may be collected in a buffer 302 in the order in which they are received. In some embodiments, the input prompts are reorganized by the scheduling engine 118 to have a processing order different than the order in which they were received, as explained with respect to FIG. 2.

In the example of FIG. 3, Pn is SLO high-sensitive. Thus, Pn is batched by itself into a first batch 304 with a batch size of 1 to prioritize response time over hardware utilization, and is assigned to a first resource 306, which includes a portion of the memory 114 in the hardware resource 110. P3 is SLO sensitive and thus, is also batched by itself into a second batch 308 with a batch size of 1 to prioritize response time, and assigned to a second resource 310, which may include a portion of the memory 114 in the hardware resource 110. Other small batch sizes other than 1 may also be used.

The remaining prompts P1, P2, and P4 are either SLO insensitive or less sensitive. Thus, in order to prioritize hardware utilization over response time, the remaining prompts are batched together into a third batch 312 having a batch size of 3, and assigned to a third resource 314, which may include a portion of the memory 114 in the hardware resource 110. In the example of FIG. 3, the batching engine generates the third batch 312 based on determining that the total predicted response lengths of P1, P2, and P4 is less than the allocated portion of the memory 114. In some embodiments, P1, P2, and P4 in the third batch 312 may be processed concurrently based on the allocated third resource 314.

In the example of FIG. 3, the ML model 108 processes Pn first using allocated resource 306, and processes P3 next using allocated resource 310. Data (e.g., KV cache data) that is generated during the processing may be stored respectively in the allocated resources 306, 310. Because of the small batch size, the response time or latency in processing batch 1 and batch 2 may be faster than the response time or latency in processing batch 3. However, the resource utilization in batch 3 may be more efficient than the resource utilization of batch 1 or batch 2.

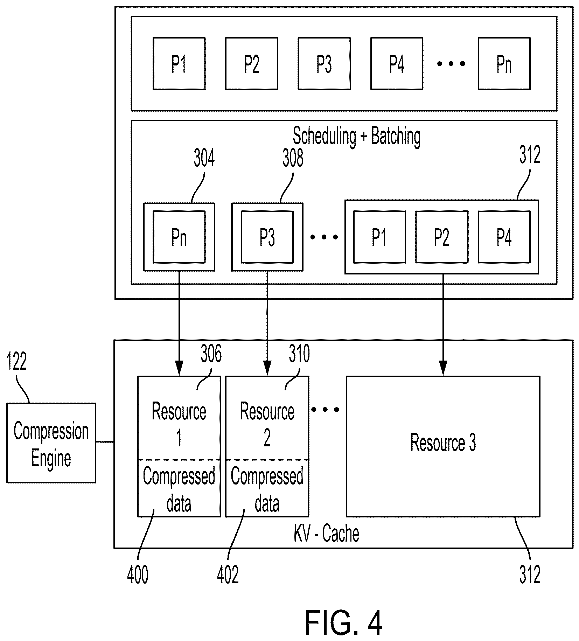

FIG. 4 depicts a conceptual diagram of KV cache data that is compressed by the compression engine 122 according to one or more embodiments. In the example of FIG. 4, the first batch 304 is processed first, and first KV cache data generated during the processing of the first batch 304 is stored in the first resource 306. The second batch 308 is processed second, and second KV cache data generated during the processing of the second batch is stored in the second resource 310.

In the example of FIG. 3, it is assumed that the first and second KV cache data stored in the first and second resources cause an overall utilization of the memory 114 that is higher than a set threshold. The utilization of the memory 114 that is higher than the set threshold may be a trigger for the compression engine 122 to compress all or some of the stored KV cache data. In the example of FIG. 4, the first and second KV cache data are compressed to generate first and second compressed data 400, 402. The compression of the first and second KV cache data may free up usable space for storing a third KV cache data generated during the processing of the third batch 312. In the example of FIG. 4, the third KV cache data is stored in an uncompressed manner.

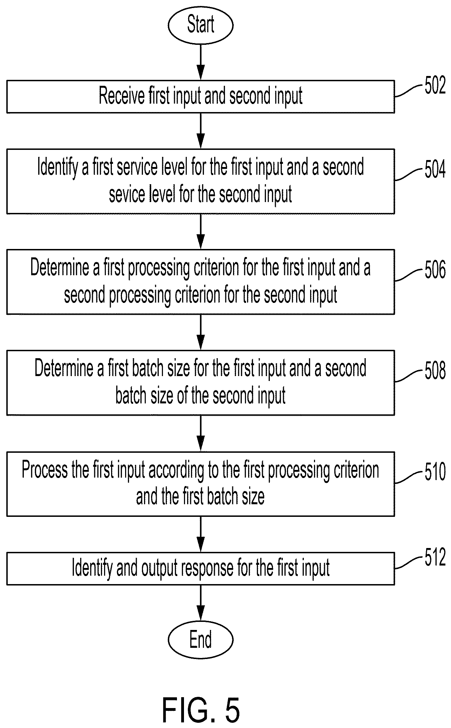

FIG. 5 depicts a flow diagram of a process for processing input prompts for an ML model according to one or more embodiments of the present disclosure. The process starts, and in action 502, the ML system receives a first input (e.g., a first prompt) and a second input (e.g., a second prompt) from the one or more devices 102.

In action 504, the ML system (e.g., the scheduling engine 118) identifies a first service level (e.g., a first SLO) for the first input and a second service level (e.g., a second SLO) for the second input. The first or second SLO may be associated with a latency requirement for providing a response based on the first or second input.

In action 506, based on the first service level and the second service level, the scheduling engine 118 determines a first processing criterion for the first input different than a second processing criterion for the second input. In some embodiments, the first processing criterion identifies an order for handling the first input relative to the second input. The identified order may be different from an order in which the first input is received by the processor relative to the second input. For example, the first input may be scheduled for processing first before the second input even if the first input is received later in time by the ML system 104 than the second input. In some embodiments, the first processing criterion may be selected based on the monitored hardware metrics.

In action 508, based on the first service level and the second service level, the batching engine 120 determines a first batch size for the first input different from a second batch size for the second input. In this regard, the batching engine 120 may transmit a request to the length prediction engine 124 to receive a predicted length of a first response for the first input. The first batch size may be determined based on the predicted length. In some embodiments, the length prediction engine 124 may include a second (lightweight) ML model that receives the first input and provides an inference for the first input. The predicted length may be based on the inference.

In some embodiments, the selected first batch size is based on the hardware metrics monitored by the monitoring engine 116. The hardware metrics may measure the input traffic to the ML system. In some embodiments, the higher the traffic, the larger the batch size.

In action 510, the ML model 108 processes the first input according to the first processing criterion (e.g., scheduling order) and the first batch size, and generates a response to the first input. In this regard, the input prompts batched together with the first input (if any) are processed together (e.g., concurrently) using the allocated hardware resource 110.

In action 512, the response is identified and output to the requesting device 102. In some embodiments, the generated output satisfies the SLO requirement of the first input.

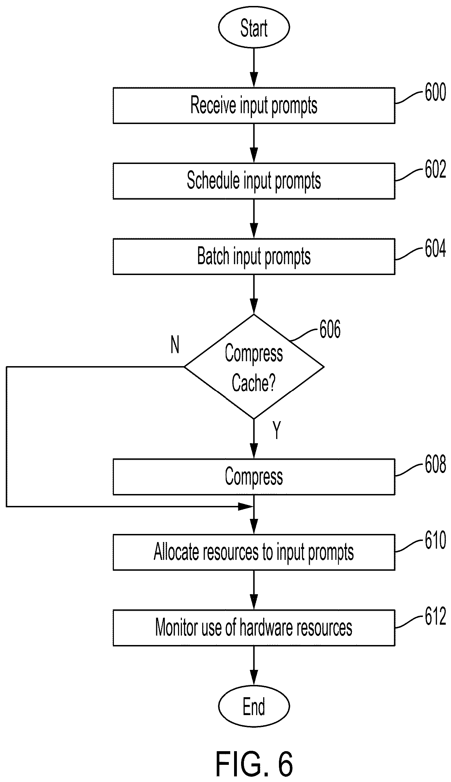

FIG. 6 depicts another flow diagram of a process for processing input prompts for an ML model according to one or more embodiments of the present disclosure. The process starts, and in action 600, the ML system receives one or more input prompts from one or more devices 102.

In action 602, the scheduling engine 118 determines a processing order of the received input prompts. The processing order may determine the order in which the prompts are processed by the ML model 108. The processing order may be different from the order in which the input prompts were received.

In action 604, the batching engine 120 identifies one or more batch sizes and batches the received input prompts based on the identified batch size(s). In some embodiments, the input prompts with more stringent or sensitive SLOs may be batched individually. The input prompts with less stringent or sensitive SLOs may be batched according to a batch size that is based on the input traffic to the ML system 104 and/or the predicted response lengths of the input prompts that balances the trade-off between latency and hardware utilization.

In action 606, a determination is made as to whether a trigger has been detected for compressing the KV cache. The trigger may be, for example, detecting capacity of the memory 114 that is below a threshold capacity, or utilization of the memory that is above a threshold utilization that may put the system at risk of an out-of-memory error.

If the answer is YES, the compressing engine 122 employs a compression technique in act 608 to compress at least a portion of the KV cache. The compression technique may include, for example, quantization, eviction, and/or the like.

In action 610, the ML system 104 allocates hardware resources to the input prompts. In this regard, the ML system 104 may allocate at least a portion of the memory 114 to the input prompt.

In some embodiments, the monitoring engine 116 monitors, in act 612, utilization of the hardware resources as the prompts are processed by the ML model 108 and updates associated tables or data structures with the monitored information.

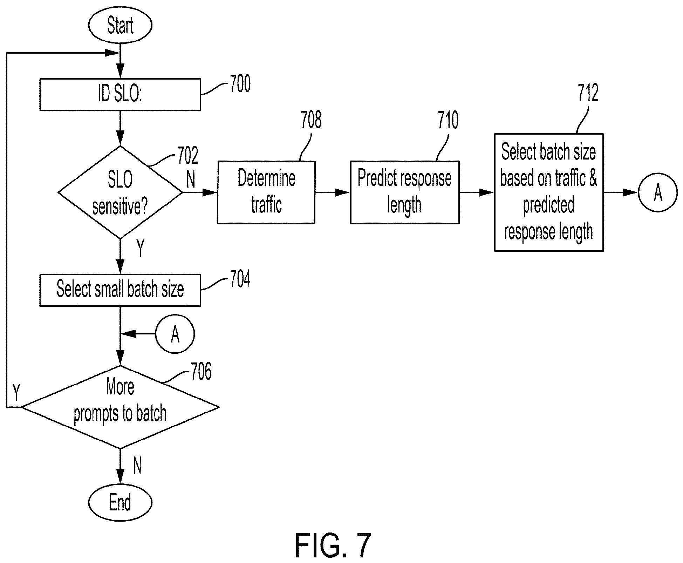

FIG. 7 depicts a flow diagram of a process for selecting a batch size and grouping one or more input prompts into a batch according to the batch size according to one or more embodiments. The process starts, and in action 700, the SLO requirements of one or more identified input prompts are determined.

In action 702, a determination is made as to whether the identified input prompts are latency or SLO sensitive. An input prompt may be deemed to be latency sensitive if the tail latency percentile associated with the input prompt is above a threshold percentile.

If the answer is YES, a small batch size may be identified for the identified input prompts in action 704. In some embodiments, the batch size is one (1). In this regard, the identified input prompts are each placed into a batch by itself.

If the answer is NO, and the input prompts are not latency or SLO sensitive, the batching engine 120 determines, in action 708, a volume of input traffic to the ML system 104. The input traffic may be determined based on one or more monitored hardware metrics.

In action 710, the batching engine120 determines the predicted response lengths for the identified input prompts. In this regard, the batching engine 120 may transmit a request to the length prediction engine 124 and receive the predicted lengths in response.

In action 712, the batching engine 120 selects a batch size based on the determined traffic and predicted response lengths. In some embodiments, the selected batch size is proportional to the amount of determined traffic. In this regard, during periods of high traffic, batch sizes may be increased to maximize throughput. During period of low traffic, batch sizes may be decreased to prioritize response time.

In some embodiments a maximum batch size may be determined based on a sum of the predicted response lengths of the input prompts. In some embodiments, the batch size that is selected is one that does not exceed the capacity of the memory 114.

As a person of skill in the art should recognize, the systems and methods for processing prompts for an ML model according to the various embodiments of the present disclosure provide several benefits, including enhanced SLO compliance under diverse workloads, improved GPU utilization via adaptive batching and KV-cache management, scalability that allows long-sequence inferences and concurrent workloads, and/or modularity that allows one or more components of the ML system 104 to integrate into existing LLM systems.

One or more embodiments of the present disclosure may be implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for processing input prompts have been specifically described and illustrated herein, many modifications and variations will be apparent to those skilled in the art. Accordingly, it is to be understood that systems and methods for processing input prompts constructed according to principles of this disclosure may be embodied other than as specifically described herein. The disclosure is also defined in the following claims.

The systems and methods for processing input prompts may contain one or more combination of features set forth in the below statements.

Statement 1: One or more embodiments of the present disclosure are directed to a system comprising a processor, a first memory, and a second memory. The second memory stores instructions that, when executed by the processor, cause the processor to: receive a first input and a second input for a first machine learning model; identify a first service level for the first input and a second service level for the second input; based on the first service level and the second service level, determine a first processing criterion and a first batch size for the first input different from a second processing criterion and a second batch size for the second input; and process, by the first machine learning model, the first input according to the first processing criterion and the first batch size for generating a response based on the first input.

Statement 2: The system of Statement 1, wherein the first memory is associated with an acceleration unit.

Statement 3. The system of Statement 1, wherein the first service level is associated with a latency requirement for providing the response based on the first input.

Statement 4. The system of Statement 1, wherein the first processing criterion identifies an order for handling the first input relative to the second input, wherein the order is different from an order in which the first input is received by the processor relative to the second input.

Statement 5. The system of Statement 1, wherein the instructions further cause the processor to select the first processing criterion based on hardware metrics of the system.

Statement 6. The system of Statement 1, wherein the instructions that cause the processor to determine the first batch size include instructions that cause the processor to: identify predicted length of a first response for the first input, wherein the first batch size is based on the predicted length.

Statement 7. The system of Statement 6, wherein the instructions that cause the processor to identify the predicted length include instructions that cause the processor to: provide the first input to a second machine learning model; and receive, from the second machine learning model, an inference for the first input, wherein the predicted length is based on the inference.

Statement 8. The system of Statement 7, wherein the second machine learning model is configured to use less hardware resources than the first machine learning model.

Statement 9. The system of Statement 1, wherein the instructions that cause the processor to determine the first batch size include instructions that cause the processor to: determine hardware metrics for the system, wherein the first batch size is based on the hardware metrics.

Statement 10. The system of Statement 1, wherein the instructions further cause the processor to: determine that usage of the first memory satisfies a threshold; and based on the usage of the first memory satisfying the threshold, compress at least a portion of data stored in the first memory.

Statement 11. A method comprising: receiving, by a processor, a first input and a second input for a first machine learning model; identifying, by the processor, a first service level for the first input and a second service level for the second input; based on identifying the first service level and the second service level, determining, by the processor, a first processing criterion for the first input different from a second processing criterion for the second input; identifying, by the processor, usage of a first memory; based on identifying, by the processor, the usage of the first memory, selecting a first batch size for the first input different from a second batch size for the second input; and processing, by the first machine learning model, the first input according to the first processing criterion and the first batch size for generating a response based on the first input.

Statement 12. The method of Statement 11, wherein the first memory is associated with an acceleration unit.

Statement 13. The method of Statement 11, wherein the first service level is associated with a latency requirement for providing the response based on the first input.

Statement 14. The method of Statement 11, wherein the first processing criterion identifies an order for handling the first input relative to the second input, wherein the order is different from an order in which the first input is received by the processor relative to the second input.

Statement 15. The method of Statement 11 further comprising: selecting the first processing criterion based on hardware metrics of a system that includes the processor.

Statement 16. The method of Statement 11, wherein the determining the first batch size further includes: identifying, by the processor, predicted length of a first response for the first input, wherein the first batch size is based on the predicted length.

Statement 17. The method of Statement 16, wherein the identifying of the predicted length further includes: providing, by the processor, the first input to a second machine learning model; and receiving, by the processor, from the second machine learning model, an inference for the first input, wherein the predicted length is based on the inference.

Statement 18. The method of Statement 17, wherein the second machine learning model is configured to use less hardware resources than the first machine learning model.

Statement 19. The method of Statement 11, wherein the selecting of the first batch size includes determining hardware metrics of a system that includes the processor, wherein the first batch size is based on the hardware metrics.

Statement 20. The method of Statement 11 further comprising: determining that the usage of the first memory satisfies a threshold; and based on the usage of the first memory satisfying the threshold, compressing at least a portion of data stored in the first memory.

## Claims

1. A system comprising:
a processor;
a first memory; and
a second memory, wherein the second memory stores instructions that, when executed by the processor, cause the processor to:
receive a first input and a second input for a first machine learning model;
identify a first service level for the first input and a second service level for the second input;
based on the first service level and the second service level, determine a first processing criterion and a first batch size for the first input different from a second processing criterion and a second batch size for the second input; and
process, by the first machine learning model, the first input according to the first processing criterion and the first batch size for generating a response based on the first input.

2. The system of claim 1, wherein the first memory is associated with an acceleration unit.

3. The system of claim 1 or 2, wherein the first service level is associated with a latency requirement for providing the response based on the first input.

4. The system of any one of claims 1 to 3, wherein the first processing criterion identifies an order for handling the first input relative to the second input, wherein the order is different from an order in which the first input is received by the processor relative to the second input.

5. The system of any one of claims 1 to 4, wherein the instructions further cause the processor to select the first processing criterion based on hardware metrics of the system.

6. The system of any one of claims 1 to 5, wherein the instructions that cause the processor to determine the first batch size include instructions that cause the processor to:
identify a predicted length of a first response for the first input, wherein the first batch size is based on the predicted length.

7. The system of claim 6, wherein the instructions that cause the processor to identify the predicted length include instructions that cause the processor to:
provide the first input to a second machine learning model; and
receive, from the second machine learning model, an inference for the first input, wherein the predicted length is based on the inference.

8. The system of claim 7, wherein the second machine learning model is configured to use less hardware resources than the first machine learning model.

9. The system of any one of claims 1 to 8, wherein the instructions that cause the processor to determine the first batch size include instructions that cause the processor to:
determine hardware metrics for the system, wherein the first batch size is based on the hardware metrics.

10. The system of any one of claims 1 to 9, wherein the instructions further cause the processor to:
determine that usage of the first memory satisfies a threshold; and
based on the usage of the first memory satisfying the threshold, compress at least a portion of data stored in the first memory.

11. A method comprising:
receiving, by a processor, a first input and a second input for a first machine learning model;
identifying, by the processor, a first service level for the first input and a second service level for the second input;
based on identifying the first service level and the second service level, determining, by the processor, a first processing criterion for the first input different from a second processing criterion for the second input;
identifying, by the processor, usage of a first memory;
based on identifying, by the processor, the usage of the first memory, selecting a first batch size for the first input different from a second batch size for the second input; and
processing, by the first machine learning model, the first input according to the first processing criterion and the first batch size for generating a response based on the first input.

12. The method of claim 11, wherein the first memory is associated with an acceleration unit.

13. The method of claim 11 or 12, wherein the first service level is associated with a latency requirement for providing the response based on the first input.

14. The method of any one of claims 11 to 13, wherein the first processing criterion identifies an order for handling the first input relative to the second input, wherein the order is different from an order in which the first input is received by the processor relative to the second input.

15. The method of any one of claims 11 to 14, further comprising:
selecting the first processing criterion based on hardware metrics of a system that includes the processor.
